# EUROPEAN PATENT APPLICATION

(11) **EP 3 819 706 A1**
(43) Date of publication of application: **12.05.2021**
(21) Application number: 19830524.5
(22) Date of filing: 11.06.2019
(51) Int. Cl.: G02F 1/1347, G02F 1/13, G02F 1/1333, G09F 9/46, G02F 1/1335

(54) **IMAGE DISPLAY DEVICE**

(30) Priority: 05.07.2018 JP 2018128267
(71) Applicant: Panasonic Intellectual Property Management Co., Ltd., Osaka-shi, Osaka 540-6207 (JP)
(72) Inventor: KITAZUMI, Tsubasa, Osaka 540-6207 (JP); TAKEUCHI, Taizou, Osaka 540-6207 (JP); ARAYA, Jun, Osaka 540-6207 (JP)
(74) Representative: Vigand, Philippe
(86) International application number: PCT/JP2019/023044
(87) International publication number: WO 2020/008818

(57) **Abstract**

An image display apparatus (10) includes a sub display panel (30) and a main display panel (20). The sub display panel (30) includes a liquid crystal cell (31) and a polarizing plate (32) arranged along at least one of main surfaces of the liquid crystal cell (31). The main display panel (20) includes a liquid crystal cell (21) and a polarizing plate (22) arranged along at least one of main surfaces of the liquid crystal cell (21). The main display panel (20) overlaps the sub display panel (30) in a direction perpendicular to a main surface of the sub display panel (30). When the sub display panel (30) is heated, the sub display panel (30) is warped towards the main display panel (20).

## Description

### TECHNICAL FIELD

The present disclosure relates to image display apparatuses that include a display panel having liquid crystal cells.

### BACKGROUND ART

Patent Literature (PTL) 1 discloses a liquid crystal display apparatus that includes two or more liquid crystal panels overlapping each other. In PTL 1, it is disclosed that, in the overlapping liquid crystal panels having substrates, a thickness of at least one substrate on the side adjacent to another liquid crystal panel is smaller than a thickness of a substrate on the side not adjacent to any liquid crystal panel, thereby reducing moire occurrence.

### Citation List

### Patent Literature

PTL 1: Japanese Unexamined Patent Application Publication No. 2011-76107

### SUMMARY OF THE INVENTION

### TECHNICAL PROBLEM

The present disclosure provides an image display apparatus that includes two overlapping display panels and that has a simpler structure and improved display performance.

### SOLUTION TO PROBLEM

According to the present disclosure, there is provided an image display apparatus, including: a first display panel including a first liquid crystal cell and at least one first polarizing plate, the at least one first polarizing plate being arranged along at least one of main surfaces of the first liquid crystal cell; and a second display panel including a second liquid crystal cell and at least one second polarizing plate, the at least one second polarizing plate being arranged along at least one of main surfaces of the second liquid crystal cell, the second display panel overlapping the first display panel in a direction perpendicular to a main surface of the first display panel, wherein when the first display panel is heated, the first display panel is warped towards the second display panel.

### ADVANTAGEOUS EFFECTS OF INVENTION

The present disclosure enables an image display apparatus to have a simpler structure and improved display performance.

### BRIEF DESCRIPTION OF DRAWINGS

FIG. 1 is an external perspective view of an image display apparatus according to an embodiment.
FIG. 2 is an exploded perspective view of the image display apparatus according to the embodiment.
FIG. 3 is a schematic sectional view illustrating the image display apparatus according to the embodiment.
FIG. 4 is an enlarged sectional view illustrating a configuration of a main display panel and a sub display panel according to the embodiment.
FIG. 5 is a sectional view schematically illustrating a state where the main display panel and the sub display panel according to the embodiment are deformed by heat.
FIG. 6 is an enlarged sectional view illustrating a configuration of a main display panel and a sub display panel according to Modification 1 of the embodiment.
FIG. 7 is a sectional view schematically illustrating a state where the main display panel and the sub display panel according to Modification 1 of the embodiment are deformed by heat.
FIG. 8 is an enlarged sectional view illustrating a configuration of a main display panel and a sub display panel according to Modification 2 of the embodiment.
FIG. 9 is an enlarged sectional view illustrating a configuration of a main display panel and a sub display panel according to Modification 3 of the embodiment.
FIG. 10 is an enlarged sectional view illustrating a configuration of a main display panel and a sub display panel according to Modification 4 of the embodiment.
FIG. 11 is a perspective view illustrating a shape of a mold frame according to Modification 5 of the embodiment.

### DESCRIPTION OF EXEMPLARY EMBODIMENTS

The inventors have found that a following problem occurs regarding a conventional image display apparatus. Conventionally, in an image display apparatus that displays an image using a liquid crystal cell, in order to improve a contrast ratio, for example, a structure of overlapping two display panels including the liquid crystal cell has been proposed.

More specifically, on a back surface side (backlight side) of a display panel that displays a color image, a display panel that displays a monochrome image is arranged. Thus, by increasing a light quantity emitted from a backlight, luminance at a part to be made bright can be improved, and the luminance can be suppressed to be low by a light shielding effect by a monochrome image for a part to be made dark. As a result, the contrast ratio in the image displayed by the image display apparatus is improved.

In a case of overlapping two display panels in this way, while the contrast ratio improving effect is obtained as described above, there is a problem that a display image is perceived as double when relative positions of the two display panels in a planar view are displaced. Then, in order to suppress occurrence of the problem, there is a case where an entire surface of one of the two display panels and an entire surface of the other are made to adhere (entire surface adhesion) using optical clear adhesive (OCA), for example. Thus, displacement of one of the two display panels from the other is practically prevented.

However, in this case, for example, it is needed to accurately position the two display panels and then accurately make the entire surfaces of the two display panels adhere with each other so as not to leave air bubbles between the two display panels and the OCA further. This is a factor of increasing man-hours required to manufacture the image display apparatus or increasing a manufacture cost.

Then, the inventors have examined simplification of a process of sticking the two display panels. As a result, it is found that, when the two display panels are made to adhere only at peripheral edge portions of each other, for example, a distance between the two display panels increases at a non-adhering center portion, and thus the problem that the display image is perceived as double occurs.

More specifically, one or both of the two display panels are bent by heat of a backlight unit for example, thereby causing a state where a distance between the display panels increases at a part of the two display panels in the planar view. In this case, even when the relative positions of the two display panels in the planar view are not displaced, in the case of obliquely viewing the one part, parts that should match on the front and rear display panels look displaced so that the display image is perceived as double.

The present disclosure is based on these observations, and as a result of deliberate study, the inventors were able to conceptualize a structure of the image display apparatus that has a simpler structure and improved display performance.

Hereinafter, an embodiment and variations thereof will be described in detail with reference to the drawings when appropriate. However, unnecessarily detailed description may be omitted. For example, detailed descriptions of well-known matters or descriptions of components that are substantially the same as components described previous thereto may be omitted. This is to avoid unnecessary redundancy and facilitate understanding of the descriptions for those skilled in the art.

It should be noted that the accompanying drawings and subsequent description are provided by the inventors of the present disclosure to facilitate sufficient understanding of the present disclosure by those skilled in the art, and are thus not intended to limit the scope of the subject matter recited in the claims.

Moreover, in the subsequent embodiment and variations, the top-bottom direction is represented by a Z-axis, the front-back direction is represented by a Y-axis, and the left-right direction is represented by the X-axis for the sake of description, but these do not limit the orientation of the image display apparatus according to the present disclosure at the time of manufacture or usage. In the subsequent descriptions, for example, the X-plus axis indicates the direction of the arrow of the X-axis and the X-minus axis indicates the direction opposite of the X-plus axis. The same applies to the Y-axis and the Z-axis. It should also be noted that the respective figures are schematic diagrams and are not necessarily precise illustrations. Therefore, the reduced scale and the like of each figure are not necessarily correct.

### (Embodiment)

### [1. Main configuration of image display apparatus]

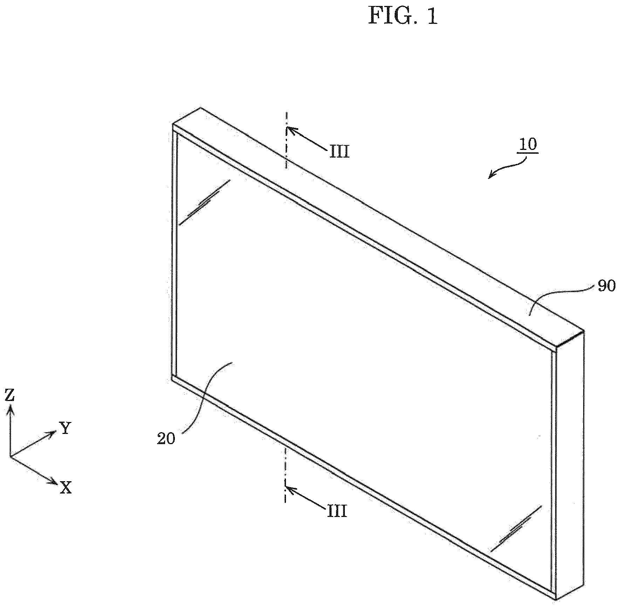

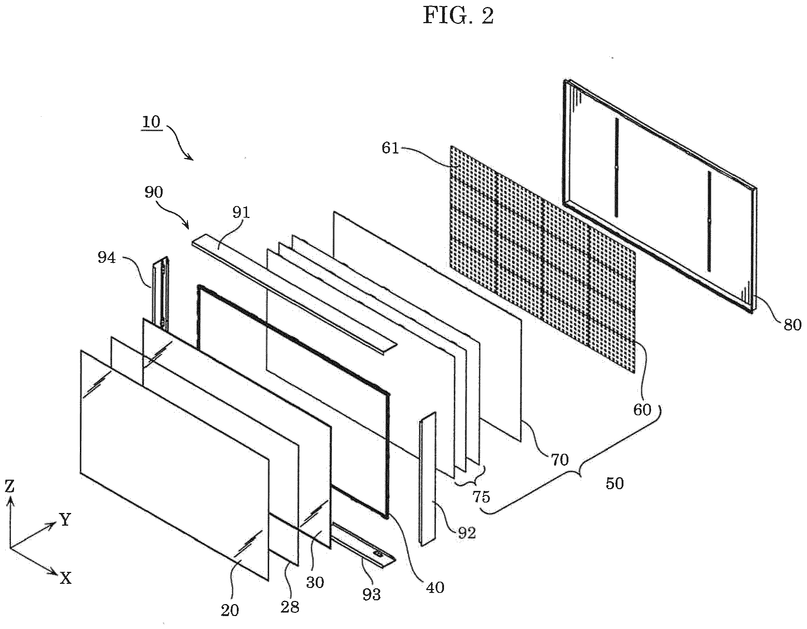

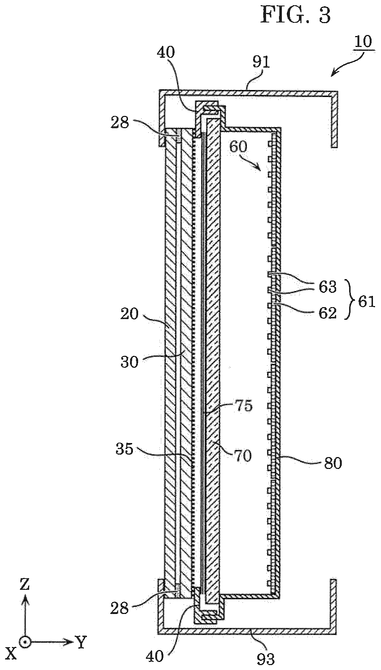

First, with reference to FIGs. 1 to 3, the main configuration of image display apparatus 10 according to the embodiment will be described. FIG. 1 is an external perspective view of image display apparatus 10 according to the embodiment. FIG. 2 is an exploded perspective view of image display apparatus 10 according to the embodiment. Note that, in FIG. 2, illustrations of a back cover configuring a backmost surface of image display apparatus 10, and a driving circuit board that drives a liquid crystal cell, and the like are omitted, and elements regarding a sticking structure of two display panels are mainly illustrated. FIG. 3 is a schematic sectional view illustrating image display apparatus 10 according to the embodiment. More specifically, FIG. 3 simply illustrates a cross-section taken along line III-III of FIG. 1.

Image display apparatus 10 according to the embodiment is an example of an image display apparatus configured by overlapping a plurality of display panels each including a liquid crystal cell, and is an apparatus capable of displaying still images and moving images. Image display apparatus 10 is implemented by a television receiver or a monitor display, for example.

As illustrated in FIG. 1, image display apparatus 10 according to the embodiment includes main display panel 20 that displays an image, and case 90 forming an outer shell of image display apparatus 10. Case 90 also serves as a bezel that covers a front surface peripheral edge of main display panel 20. Note that image display apparatus 10 may include a member for installing image display apparatus 10 at a predetermined position such as a stand or a wall hanging unit not illustrated.

More specifically, as illustrated in FIG. 2, image display apparatus 10 includes sub display panel 30 arranged on a back surface side of main display panel 20, and bonding member 28 that bonds peripheral edge portions of main display panel 20 and sub display panel 30 with each other. That is, main display panel 20 is arranged overlapping sub display panel 30 in a direction perpendicular to a main surface (each of both surfaces in a thickness direction) of sub display panel 30. Note that one of main display panel 20 and sub display panel 30 is an example of a first display panel, and the other is an example of a second display panel.

Main display panel 20 and sub display panel 30 each includes a liquid crystal cell and a pair of polarizing plates sandwiching the liquid crystal cell therebetween. Main display panel 20 is a display panel that displays a color image, and sub display panel 30 is a display panel that displays a monochrome image (black-and-white image). Sub display panel 30 displays the monochrome image corresponding to the color image displayed on main display panel 20 in synchronism with the color image. Thus, as described above, it is possible to display the image with a contrast ratio improved more than a contrast ratio when using only one display panel that displays the color image.

On the back surface side of sub display panel 30, backlight unit 50 is arranged. Backlight unit 50 is a device that supplies light for image display to main display panel 20 and sub display panel 30, and includes light source 60, diffusion plate 70 that diffuses and emits the light radiated by light source 60, and optical sheet unit 75 that controls distribution of the light emitted from diffusion plate 70. Optical sheet unit 75 includes a plurality of optical sheets such as a prism sheet.

In other words, in the present embodiment, backlight unit 50 is a surface light source unit that radiates planar diffused light (scattered light), and is a so-called direct type backlight unit. Note that backlight unit 50 is not limited to the direct type and may be an edge light type.

Light source 60 includes a plurality of LED modules 61 in the present embodiment. Each of the plurality of LED modules 61 includes substrate 62 and a plurality of light emitting diode (LED) elements 63 mounted on substrate 62 (see FIG. 3). Light source 60 is configured by aligning the plurality of LED modules 61 on metallic base plate 80. Note that the number of the LED modules included in light source 60 is not limited in particular, and light source 60 may be implemented by one LED module, for example.

Diffusion plate 70 and optical sheet unit 75 are arranged between the peripheral edge portion of base plate 80 and mold frame 40, and main display panel 20 and sub display panel 30 are arranged between the front surface peripheral edge portion of case 90 and mold frame 40. Mold frame 40 is a rectangular annular member made of a resin, and supports or position-controls main display panel 20, sub display panel 30, and optical sheet unit 75 or the like.

Case 90 houses main display panel 20, sub display panel 30, and backlight unit 50 or the like, and covers the outer peripheries. As a material of case 90, a resin such as polycarbonate or polystyrene, or a metal such as an aluminum alloy is adopted.

Note that, in the present embodiment, case 90 is configured by four parts of upper T frame member 91, right side R frame member 92, lower B frame member 93, and left side L frame member 94, but a division number and a division form of case 90 are not limited in particular. In addition, while mold frame 40 is indicated as a sequential rectangular annular member in FIG. 2, mold frame 40 may be formed by connecting a plurality of members.

### [2. Sticking structure of two display panels]

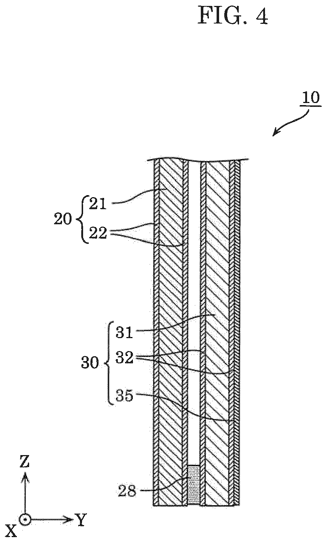

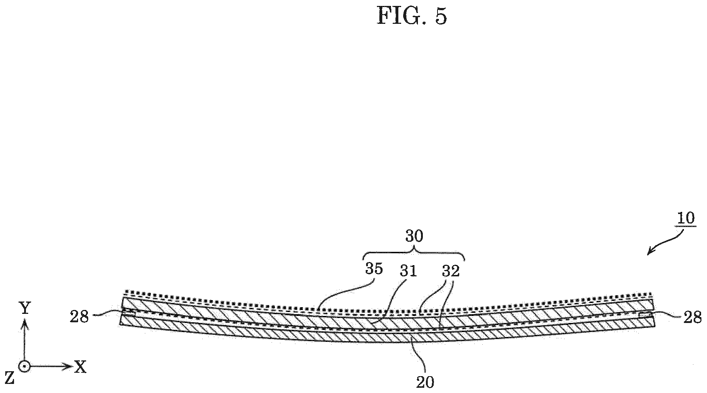

Next, the sticking structure of main display panel 20 and sub display panel 30 provided in image display apparatus 10 according to the embodiment and the effect or the like will be described with reference to FIG. 4 and FIG. 5 in addition to FIG. 3 described above.

FIG. 4 is an enlarged sectional view illustrating a configuration of main display panel 20 and sub display panel 30 according to the embodiment. More specifically, FIG. 4 is a diagram in which a lower end portion of main display panel 20 and sub display panel 30 in FIG. 3 is enlarged. FIG. 5 is a sectional view schematically illustrating a state where main display panel 20 and sub display panel 30 according to the embodiment are deformed by heat.

Note that FIG. 5 schematically illustrates a cross section parallel to an XY plane at a center position in a vertical direction of main display panel 20 and sub display panel 30. In addition, in FIG. 3 and FIG. 5, light transmissive sheet 35 is indicated by a thick dotted line, and in FIG. 5, a pair of polarizing plates 32 are indicated by broken lines along liquid crystal cell 31.

As illustrated in FIG. 2 and FIG. 3, main display panel 20 and sub display panel 30 are stuck together by bonding the peripheral edge portions of each other by bonding member 28. That is, the peripheral edge portion of one of main display panel 20 and sub display panel 30 arranged overlapping each other in a front-back direction and the peripheral edge portion of the other are bonded by bonding member 28.

When the two display panels are bonded only at the peripheral edge portions in this way, as described above, while a process of sticking the two display panels is simplified, the two display panels are separated at a center portion (part on an inner side of the peripheral edge portion), and as a result, a problem that a display performance declines occurs.

In order to cope with the problem, image display apparatus 10 according to the present embodiment is configured such that one of main display panel 20 and sub display panel 30 is warped towards the other by heat. A specific configuration example is as follows.

Main display panel 20 includes liquid crystal cell 21 that displays the color image and a pair of polarizing plates 22 sandwiching liquid crystal cell 21 therebetween, and sub display panel 30 includes liquid crystal cell 31 that displays the monochrome image and the pair of polarizing plates 32 sandwiching liquid crystal cell 31 therebetween. That is, polarizing plates 21 are respectively arranged along both of main surfaces of liquid crystal cell 21, and polarizing plates 31 are respectively arranged along both of main surfaces of liquid crystal cell 31. Note that, in the present embodiment, polarizing plate 32 is an example of a first polarizing plate, and polarizing plate 22 is an example of a second polarizing plate.

Each of liquid crystal cell 21 and Liquid crystal cell 31 is configured by elements such as a glass substrate, a transparent electrode, and a liquid crystal layer, though not shown in FIG. 4. In addition, liquid crystal cell 21 is held between the pair of polarizing plates 22, and liquid crystal cell 31 is held between the pair of polarizing plates 32. Each of polarizing plate 22 and polarizing plate 32 is a polarizing film formed of a resin material, for example.

Each of main display panel 20 and sub display panel 30 that are a multilayer structure in this way is bent due to thermal expansion by being heated from backlight unit 50 when, for example, image display apparatus 10 is in an ON state to display the image. In addition, it is difficult to recognize beforehand which part of main display panel 20 and sub display panel 30 is to be bent in which direction.

Then, in the present embodiment, sub display panel 30 is made to have such a characteristic that sub display panel 30 is forcibly warped convexly towards main display panel 20. More specifically, as illustrated in FIGs 3 to 5, sub display panel 30 includes light transmissive sheet 35 stuck to a surface on a side opposite to main display panel 20. Light transmissive sheet 35 is formed of a material having a smaller thermal expansion coefficient than a thermal expansion coefficient of polarizing plate 32 included in sub display panel 30.

By such a configuration, when the pair of polarizing plates 32 and light transmissive sheet 35 of sub display panel 30 are heated to a same level by heat from backlight unit 50 for example, since an elongation amount of light transmissive sheet 35 on the back surface side is smaller than an elongation amount of the pair of polarizing plates 32, as illustrated in FIG. 5, sub display panel 30 is warped towards main display panel 20 as a whole.

That is, sub display panel 30 is deformed convexly towards main display panel 20 such that a gap at the center portions of sub display panel 30 and main display panel 20 becomes small. Therefore, occurrence of the problem of the double display image caused by enlargement of the gap between sub display panel 30 and main display panel 20 is suppressed.

Note that an example of a material of polarizing plate 32 is tri acetyl cellulose (TAC) having the thermal expansion coefficient of about 8×10⁻⁵/°C, and an example of a material of light transmissive sheet 35 is polyethylene terephthalate (PET) having the thermal expansion coefficient of about 6.5×10⁻⁵/°C.

In addition, in FIG. 5, sub display panel 30 is relatively greatly warped in order to facilitate visual recognition of a warp of sub display panel 30, and as a result, main display panel 20 is also warped in a same direction as sub display panel 30. However, for example, sub display panel 30 may be warped towards main display panel 20 to such a level that main display panel 20 can maintain a flat state.

In addition, between liquid crystal cell 21 and liquid crystal cell 31, only one of polarizing plate 22 and polarizing plate 33 may be arranged. That is, it is possible to share one polarizing plate arranged between liquid crystal cell 21 and liquid crystal cell 31 by main display panel 20 and sub display panel 30.

As described above, image display apparatus 10 according to the present embodiment includes the first display panel and the second display panel. The first display panel includes a first liquid crystal cell and the first polarizing plate arranged along at least one of main surfaces of the first liquid crystal cell. The second display panel includes a second liquid crystal cell and the second polarizing plate arranged along at least one of main surfaces of the second liquid crystal cell. The second display panel is arranged overlapping the first display panel in a direction perpendicular to a main surface of the first display panel. More specifically, image display apparatus 10 includes sub display panel 30 including liquid crystal cell 31 and the pair of polarizing plates 32 as the first display panel, and includes main display panel 20 including liquid crystal cell 21 and the pair of polarizing plates 22 as the second display panel. When sub display panel 30 is heated, sub display panel 30 is warped towards main display panel 20.

In this way, since sub display panel 30 and main display panel 20 are arranged overlapping each other, the contrast ratio in the display image can be improved as described above.

In addition, in the above-described configuration, one of the center portions of sub display panel 30 and main display panel 20 is not constrained from the other. However, since sub display panel 30 has the characteristic to be warped towards main display panel 20 by heat, when image display apparatus 10 is in use for example, the gap between sub display panel 30 and main display panel 20 at the center portion is hardly enlarged. Thus, even when the peripheral edge portions of sub display panel 30 and main display panel 20 are bonded with each other for example without making the entire surface of one of the two display panels and the entire surface of the other adhere using the OCA or the like as before, the occurrence of the problem of the double display image caused by the enlargement of the gap is suppressed.

In this way, by image display apparatus 10 according to the present embodiment, the display performance can be improved by the simple configuration.

Note that, since bonding member 28 is arranged only at the peripheral edge portions that are regions not practically affecting image display in sub display panel 30 and main display panel 20, it is possible to use a double-sided tape having a low light transmission property or having no light transmission property as bonding member 28. That is, the peripheral edge portions of sub display panel 30 and main display panel 20 can be bonded with each other using a member which is relatively inexpensive and easy to obtain. Further, as bonding member 28, an adhesive material formed of optically clear resin (OCR) for example may be used.

In the present embodiment, more specifically, sub display panel 30 includes light transmissive sheet 35 stuck to the side opposite to the side facing main display panel 20. Light transmissive sheet 35 is formed of the material having the smaller thermal expansion coefficient than the thermal expansion coefficient of polarizing plate 32 included in sub display panel 30. Thus, when sub display panel 30 is heated, sub display panel 30 is warped towards main display panel 20.

That is, in the present embodiment, in sub display panel 30, light transmissive sheet 35 is stuck to polarizing plate 32 on the side opposite to main display panel 20 of the pair of polarizing plates 32, and it is harder for light transmissive sheet 35 to be thermally expanded than for polarizing plate 32. Thus, the characteristic to be warped towards main display panel 20 when heated, which is the characteristic that sub display panel 30 has, is achieved. In this case, for example, just by sticking light transmissive sheet 35 to an existing display panel that displays the monochrome image, sub display panel 30 can be manufactured.

In addition, when sticking light transmissive sheet 35 to one polarizing plate 32 of sub display panel 30, the entire surface of polarizing plate 32 and the entire surface of light transmissive sheet 35 are made to adhere using the OCA for example. In this case, accuracy of matching relative positions by a pixel unit needed in the case of making the entire surfaces of the two display panels adhere with each other using the OCA is not demanded. Thus, work of sticking light transmissive sheet 35 to one polarizing plate 32 of sub display panel 30 is easier than work of making the entire surfaces of the two display panels adhere with each other.

Further, in the present embodiment, image display apparatus 10 further includes backlight unit 50. Sub display panel 30 is arranged between main display panel 20 and backlight unit 50.

That is, sub display panel 30 arranged on the side near backlight unit 50 which is a light source and is also a heat source has the characteristic to be warped towards main display panel 20 by heat. Therefore, for example, when image display apparatus 10 is in use, an enlargement suppressing effect for the gap between sub display panel 30 and main display panel 20 by the heat of backlight unit 50 is easily obtained.

While image display apparatus 10 according to the embodiment has been described above, image display apparatus 10 may include sub display panel 30 or main display panel 20 in a form different from the form illustrated in FIGs 1 to 5. Then, modifications regarding sub display panel 30, main display panel 20, or the support structure will be described with a focus on a difference from the above-described embodiment.

### (Modification 1)

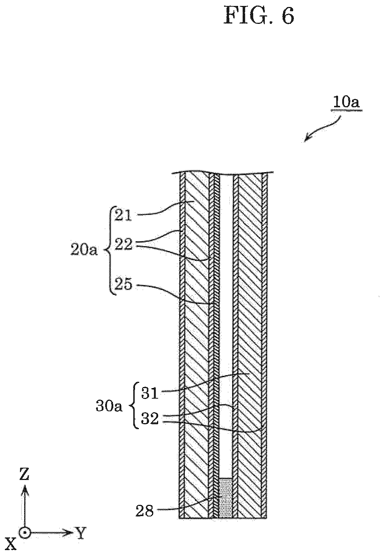

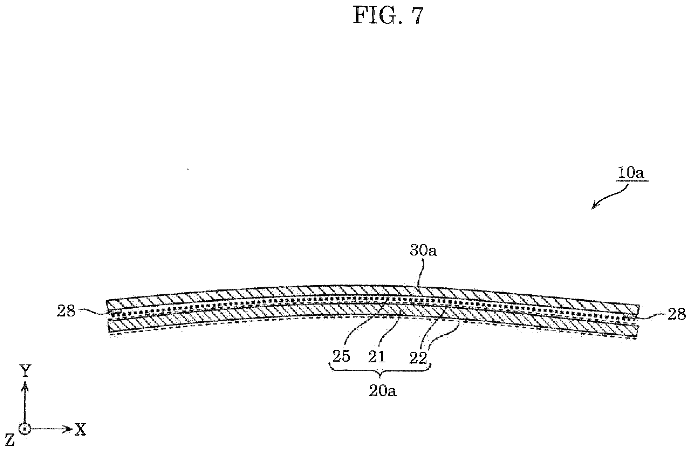

FIG. 6 is an enlarged sectional view illustrating a configuration of main display panel 20a and sub display panel 30a according to Modification 1 of the embodiment. FIG. 7 is a sectional view schematically illustrating a state where main display panel 20a and sub display panel 30a according to Modification 1 of the embodiment are deformed by heat.

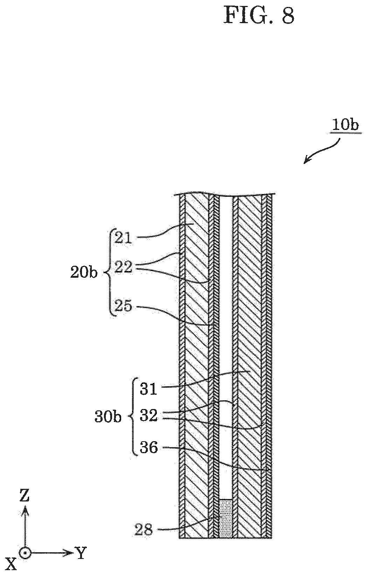

More specifically, FIG. 6 is a sectional view at the lower end portion of main display panel 20a and sub display panel 30a, and is the sectional view at the same position as FIG. 4 described above. This is applied also to FIGs 8 to 10 to be described later. In addition, FIG. 7 schematically illustrates a cross section parallel to the XY plane at the center position in the vertical direction of main display panel 20a and sub display panel 30a. Further, in FIG. 7, light transmissive sheet 25 is indicated by a thick dotted line, and the pair of polarizing plates 22 is indicated by broken lines along liquid crystal cell 21. Note that, in the present modification, main display panel 20a is an example of the first display panel, and sub display panel 30a is an example of the second display panel.

In image display apparatus 10a according to the present modification, the peripheral edge portions of main display panel 20a and sub display panel 30a are bonded with each other by bonding member 28, and image display apparatus 10a is in common with image display apparatus 10 according to the above-described embodiment at the point. The present modification is characterized by the point that main display panel 20a includes light transmissive sheet 25.

More specifically, main display panel 20a includes light transmissive sheet 25 stuck on the side facing sub display panel 30a, and light transmissive sheet 25 is formed of a material having a greater thermal expansion coefficient than a thermal expansion coefficient of polarizing plate 22 included in main display panel 20a. In this case, when the pair of polarizing plates 22 and light transmissive sheet 25 of main display panel 20a are heated to the same level by the heat from backlight unit 50 for example, since an elongation amount of light transmissive sheet 25 on the back surface side is greater than an elongation amount of the pair of polarizing plates 22, as illustrated in FIG. 7, main display panel 20a is warped towards sub display panel 30a as a whole.

That is, in the present modification, since main display panel 20a includes light transmissive sheet 25, the characteristic to be warped towards sub display panel 30a when heated, which is the characteristic that main display panel 20a has, is achieved.

By the configuration, main display panel 20a is deformed such that the gap at the center portions of sub display panel 30a and main display panel 20a becomes small. Therefore, the occurrence of the problem of the double display image caused by the enlargement of the gap between sub display panel 30a and main display panel 20a is suppressed.

Note that an example of a material of polarizing plate 22 is tri acetyl cellulose (TAC) having the thermal expansion coefficient of about 8×10⁻⁵/°C. An example of a material of light transmissive sheet 25 is polyvinyl chloride (PVC) having the thermal expansion coefficient of about 10×10⁻⁵/°C or polymethylmethacrylate (PMMA) having the thermal expansion coefficient of about 9×10⁻⁵/°C.

In addition, in FIG. 7, main display panel 20a is relatively greatly warped in order to facilitate visual recognition of a warp of main display panel 20a, and as a result, sub display panel 30a is also warped in the same direction as main display panel 20a. However, for example, main display panel 20a may be warped towards sub display panel 30a to such a level that sub display panel 30a can maintain a flat state.

### (Modification 2)

FIG. 8 is an enlarged sectional view illustrating a configuration of main display panel 20b and sub display panel 30b according to Modification 2 of the embodiment. Note that, in the present modification, main display panel 20b is an example of the first display panel, and sub display panel 30b is an example of the second display panel.

In image display apparatus 10b according to the present modification, the peripheral edge portions of main display panel 20b and sub display panel 30b are bonded with each other by bonding member 28, and image display apparatus 10b is in common with image display apparatus 10 according to the above-described embodiment at the point. The present modification is characterized by the point that main display panel 20b includes light transmissive sheet 25 and sub display panel 30b includes light transmissive sheet 36.

More specifically, main display panel 20b includes light transmissive sheet 25 stuck on the surface on the side of sub display panel 30b, and light transmissive sheet 25 is formed of the material having the greater thermal expansion coefficient than the thermal expansion coefficient of the pair of polarizing plates 22 included in main display panel 20b. In addition, sub display panel 30b includes light transmissive sheet 36 stuck to the surface on the side opposite to the side of main display panel 20b, and light transmissive sheet 36 is formed of a material having a greater thermal expansion coefficient than the thermal expansion coefficient of the pair of polarizing plates 32 included in sub display panel 30b.

In this case, when the pair of polarizing plates 22 and light transmissive sheet 25 of main display panel 20b are heated to the same level by the heat from backlight unit 50 for example, since the elongation amount of light transmissive sheet 25 on the back surface side is greater than the elongation amount of the pair of polarizing plates 22, main display panel 20b is warped towards sub display panel 30b as a whole. In addition, for sub display panel 30b, when the pair of polarizing plates 32 and light transmissive sheet 36 are heated to the same level by the heat from backlight unit 50 for example, since the elongation amount of light transmissive sheet 36 on the back surface side is greater than the elongation amount of the pair of polarizing plates 32, sub display panel 30b is warped towards the side opposite to main display panel 20b as a whole.

That is, in the present modification, main display panel 20b is warped towards sub display panel 30b when main display panel 20b is heated, and sub display panel 30b is warped away from main display panel 20b when sub display panel 30b is heated. As result, for example, when image display apparatus 10b is in use, main display panel 20b and sub display panel 30b are both warped towards the back surface side.

By the configuration, sub display panel 30b and main display panel 20b are deformed so as to maintain a distance of the gap at the center portions of sub display panel 30b and main display panel 20b. Therefore, the occurrence of the problem of the double display image caused by the enlargement of the gap between sub display panel 30b and main display panel 20b is suppressed. In addition, within an image display region, dispersion of a size of the gap between sub display panel 30b and main display panel 20b is suppressed. Thus, irregularities of appearance of an image in the display image are not easily generated.

### (Modification 3)

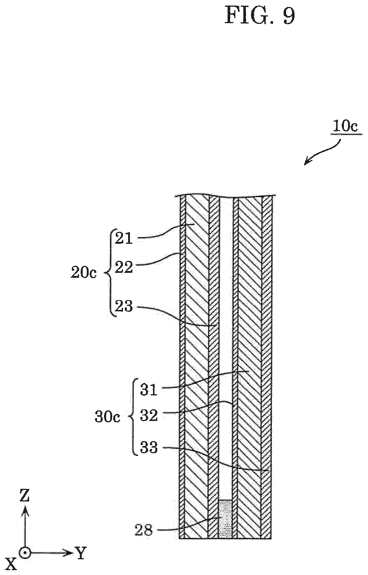

FIG. 9 is an enlarged sectional view illustrating a configuration of main display panel 20c and sub display panel 30c according to Modification 3 of the embodiment. Note that, in the present modification, main display panel 20c is an example of the first display panel, and sub display panel 30c is an example of the second display panel.

In image display apparatus 10c according to the present modification, the peripheral edge portions of main display panel 20c and sub display panel 30c are bonded with each other by bonding member 28, and image display apparatus 10c is in common with image display apparatus 10 according to the above-described embodiment at the point. In the present modification, in main display panel 20c, the polarizing plates are respectively arranged along both of the main surfaces of liquid crystal cell 21. More specifically, polarizing plates 22 and 23 are arranged so as to hold liquid crystal cell 21 therebetween. In main display panel 20c, polarizing plate 22, of the pair of polarizing plates 22 and 23, arranged on the side opposite to the side facing sub display panel 30c is formed thinner than the other polarizing plate 23. Thus, when main display panel 20c is heated, main display panel 20c is warped towards sub display panel 30c.

More specifically, polarizing plates 22 and 23 are both formed of a resin material such as TAC, and the thermal expansion coefficient is the almost same. However, when polarizing plates 22 and 23 are thermally expanded, since polarizing plate 23 is thicker than polarizing plate 22, force made to act on liquid crystal cell 21 held between polarizing plates 22 and 23 by polarizing plate 23 is greater than force by polarizing plate 22. As a result, main display panel 20c is warped towards sub display panel 30c.

That is, in the present modification, since polarizing plate 22 is formed thinner than polarizing plate 23, the characteristic to be warped towards sub display panel 30c when heated, which is the characteristic that main display panel 20c has, is achieved.

By the configuration, since the gap between sub display panel 30c and main display panel 20c is not easily enlarged, the occurrence of the problem of the double display image is suppressed. In addition, since it is not needed to arrange a separate member such as a light transmissive sheet as a component for warping main display panel 20c by heat, the problem of decline of light transmittance due to the separate member does not occur.

Further, in the present modification, polarizing plate 32, of the pair of polarizing plates 32 and 33 included in sub display panel 30c, arranged on the side of main display panel 20c is formed thinner than the other polarizing plate 33. Thus, sub display panel 30c is warped away from main display panel 20c when heated.

That is, in the present modification, main display panel 20c is warped towards sub display panel 30c when heated, and sub display panel 30c is warped away from main display panel 20c when heated. As a result, for example, when image display apparatus 10c is in use, main display panel 20c and sub display panel 30c are both warped towards the back surface side. Thus, by image display apparatus 10c according to the present modification, similarly to image display apparatus 10b according to the above-described modification 2, within the image display region, the dispersion of the size of the gap between sub display panel 30c and main display panel 20c is suppressed. Thus, the irregularities of the appearance of the image in the display image are not easily generated.

### (Modification 4)

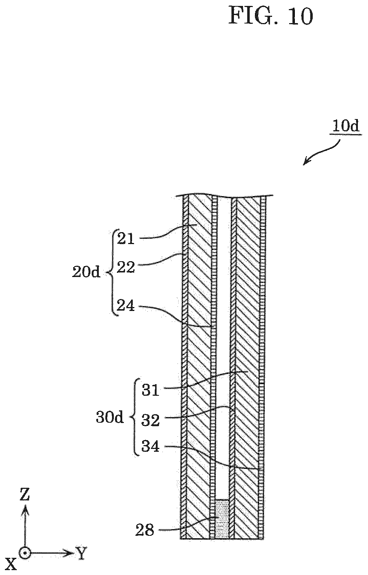

FIG. 10 is an enlarged sectional view illustrating a configuration of main display panel 20d and sub display panel 30d according to Modification 4 of the embodiment. Note that, in the present modification, main display panel 20d is an example of the first display panel, and sub display panel 30d is an example of the second display panel.

In image display apparatus 10d according to the present modification, the peripheral edge portions of main display panel 20d and sub display panel 30d are bonded with each other by bonding member 28, and image display apparatus 10d is in common with image display apparatus 10 according to the above-described embodiment at the point. In the present modification, in main display panel 20d, the polarizing plates are respectively arranged along both of the main surfaces of liquid crystal cell 21. More specifically, polarizing plates 22 and 24 are arranged so as to hold liquid crystal cell 21 therebetween. In main display panel 20d, polarizing plate 22, of the pair of polarizing plates 22 and 24, arranged on the side opposite to the side facing sub display panel 30d is formed of the material having the thermal expansion coefficient smaller than the thermal expansion coefficient of the other polarizing plate 24. Thus, when main display panel 20d is heated, main display panel 20d is warped towards sub display panel 30d.

More specifically, when polarizing plates 22 and 24 are thermally expanded, the elongation amount of polarizing plate 24 is greater than the elongation amount of polarizing plate 22, and as a result, main display panel 20d is warped towards sub display panel 30d.

That is, in the present modification, since polarizing plate 22 is formed of the material having the smaller thermal expansion coefficient than the thermal expansion coefficient of polarizing plate 24, the characteristic to be warped towards sub display panel 30d when heated, which is the characteristic that main display panel 20d has, is achieved.

By the configuration, since the gap between sub display panel 30d and main display panel 20d is not easily enlarged, the occurrence of the problem of the double display image is suppressed. In addition, since it is not needed to arrange a separate member such as a light transmissive sheet as a component for warping main display panel 20d by heat, the problem of the decline of the light transmittance due to the separate member does not occur.

Further, in the present modification, polarizing plate 32, of the pair of polarizing plates 32 and 34 included in sub display panel 30d, arranged on the side of main display panel 20d is formed of the material having the smaller thermal expansion coefficient than the thermal expansion coefficient of the other polarizing plate 34. Thus, sub display panel 30d is warped away from main display panel 20d when heated.

That is, in the present modification, main display panel 20d is warped towards sub display panel 30d when heated, and sub display panel 30d is warped away from main display panel 20d when heated. As a result, for example, when image display apparatus 10d is in use, main display panel 20d and sub display panel 30d are both warped towards the back surface side. Thus, by image display apparatus 10d according to the present modification, similarly to image display apparatus 10b according to the above-described modification 2, within the image display region, the dispersion of the size of the gap between sub display panel 30d and main display panel 20d is suppressed. Thus, the irregularities of the appearance of the image in the display image are not easily generated.

### (Modification 5)

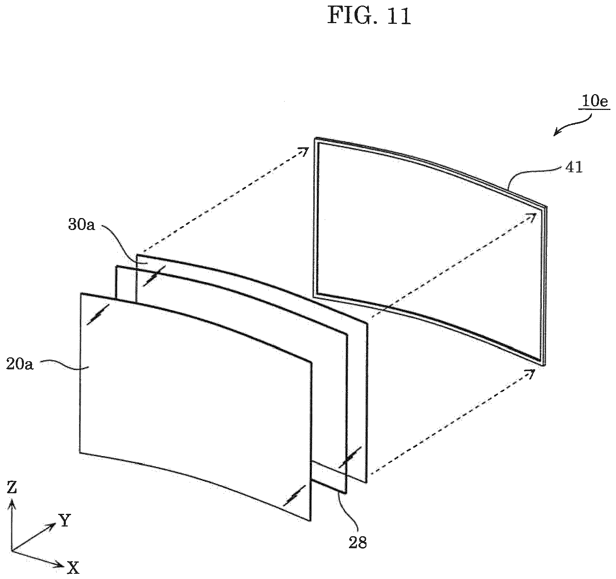

FIG. 11 is a perspective view illustrating a shape of mold frame 41 according to Modification 5 of the embodiment. Mold frame 41 according to the present modification is different from mold frame 40 according to the embodiment illustrated in FIG. 2, and two upper and lower sides are warped towards the back surface side (Y-plus axis side). Mold frame 41 is adopted as a member that supports a display panel group to be warped towards the back surface side by being heated, such as main display panel 20a and sub display panel 30a according to the above-described modification 1 for example.

That is, image display apparatus 10e according to the present modification includes mold frame 41, and main display panel 20a and sub display panel 30a bonded at the peripheral edge portions with each other by bonding member 28. Main display panel 20a and sub display panel 30a are arranged in image display apparatus 10e in a posture of being warped towards the back surface side by being supported by mold frame 41. In the state, when main display panel 20a and sub display panel 30a are heated from backlight unit 50, light transmissive sheet 25 included in main display panel 20a acts to warp main display panel 20a towards sub display panel 30a (see FIG. 6 and FIG. 7). Thus, when image display apparatus 10e is in use, the enlargement of the gap at the center portions of main display panel 20a and sub display panel 30a is practically prevented. As result, the occurrence of the problem of the double display image is suppressed.

Note that the display panel group supported by mold frame 41 may be main display panel 20b and sub display panel 30b according to the above-described modification 2, or main display panel 20c and sub display panel 30c according to the above-described modification 3. In addition, the display panel group supported by mold frame 41 may be main display panel 20d and sub display panel 30d according to the above-described modification 4. Further, for example, main display panel 20 and sub display panel 30 according to the above-described embodiment may be supported by the mold frame for which the two upper and lower sides are warped towards a front surface side (Y-minus axis side).

### (Other embodiments)

As above, the embodiment has been described as an example of a technique disclosed in the present application. However, the technique in the present disclosure is not limited thereto and is applicable also to the embodiments that are appropriately modified, substituted, added, or omitted or the like. In addition, respective components described in the above-described embodiment can be combined to attain a new embodiment. Hereinafter, other embodiments are exemplified.

For example, when main display panel 20 and sub display panel 30 can be supported by case 90 and mold frame 40 or the like, image display apparatus 10 may not include bonding member 28 as illustrated in FIG. 2. That is, in the case of not making the entire surface of one of the two display panels and the entire surface of the other adhere with each other, regardless of presence/absence of bonding member 28, the problem of the enlargement of the gap between main display panel 20 and sub display panel 30 can occur. For the problem, in the present disclosure, one of main display panel 20 and sub display panel 30 is warped towards the other when heated. Thus, the enlargement of the gap is suppressed.

In addition, to the surface on the side opposite to sub display panel 30 of main display panel 20 according to the embodiment, the light transmissive sheet formed of the material having the smaller thermal expansion coefficient than the thermal expansion coefficient of the pair of polarizing plates 22 included in main display panel 20 may be stuck. By the configuration, when main display panel 20 and sub display panel 30 are heated from backlight unit 50 for example, since the elongation amount of the light transmissive sheet is smaller than the elongation amount of polarizing plate 22 main display panel 20 is warped towards sub display panel 30. Thus, at least the gap at the center portions of main display panel 20 and sub display panel 30 is not enlarged. As a result, the occurrence of the problem of the double display image is suppressed.

That is, since one of main display panel 20 and sub display panel 30 arranged overlapping each other in the front-back direction is configured to be warped towards the other, in main display panel 20 and sub display panel 30, the enlargement of the gap at parts not bonded with each other is suppressed. In addition, in this case, since the other one of main display panel 20 and sub display panel 30 is configured to be warped away from the one, the distance of the gap at the parts not bonded with each other is maintained. As a result, the generation of the irregularities of the appearance in the display image is suppressed.

Further, in the embodiment, bonding member 28 is defined as the adhesive material formed of the OCR or the like. However, the form of the bonding member is not limited thereto, and for example, as the bonding member, a member that bonds the peripheral edge portions of main display panel 20 and sub display panel 30 with each other by sandwiching the peripheral edge portions of main display panel 20 and sub display panel 30 from front and back may be adopted.

In addition, while the case where the two display panels are arranged overlapping each other in the front-back direction has been described in the embodiment and the modifications, when three or more display panels are arranged overlapping each other in the front-back direction, the configuration of the embodiment or the modifications may be adopted. For example, when three display panels are arranged overlapping each other in the front-back direction, the display panel on a frontmost surface side may include the light transmissive sheet so that the display panel is warped towards the back surface side by heat. Or, a thickness or a thermal expansion coefficient of the pair of polarizing plates included in the display panel may be made different. In addition, when three or more display panels are arranged overlapping each other in the front-back direction for example, all of the three or more display panels may be configured to be warped towards the back surface side or the front surface side by heat.

The above embodiment has been presented as an example of the technique disclosed according to the present application. The accompanying drawings and the detailed description are provided for this purpose.

Therefore, the components described in the accompanying drawings and the detailed description may include, in addition to components essential to overcoming problems, components that are not essential to overcoming problems but are included in order to exemplify the technique described above. Thus, those non-essential components should not be deemed essential due to the mere fact that the non-essential components are illustrated in the accompanying drawings and described in the detailed description.

The above embodiment is an example of the technique in the present disclosure, and thus various modifications, substitutions, additions, and omissions are possible in the scope of the claims and equivalent scopes thereof.

### INDUSTRIAL APPLICABILITY

The present disclosure is applicable to image display apparatuses such as a television receiver or a display monitor.

### REFERENCE MARKS IN THE DRAWINGS

- 10, 10a, 10b, 10c, 10d, 10e: image display apparatus
- 20, 20a, 20b, 20c, 20d: main display panel
- 21, 31: liquid crystal cell
- 22, 23, 24, 32, 33, 34: polarizing plate
- 25, 35, 36: light transmissive sheet
- 28: bonding member
- 30, 30a, 30b, 30c, 30d: sub display panel
- 40, 41: mold frame
- 50: backlight unit
- 60: light source
- 61: LED module
- 62: substrate
- 63: LED element
- 70: diffusion plate
- 75: optical sheet unit
- 80: base plate
- 90: case
- 91: T frame member
- 92: R frame member
- 93: B frame member
- 94: L frame member

## Claims

1. An image display apparatus, comprising:
a first display panel including a first liquid crystal cell and at least one first polarizing plate, the at least one first polarizing plate being arranged along at least one of main surfaces of the first liquid crystal cell; and
a second display panel including a second liquid crystal cell and at least one second polarizing plate, the at least one second polarizing plate being arranged along at least one of main surfaces of the second liquid crystal cell, the second display panel overlapping the first display panel in a direction perpendicular to a main surface of the first display panel,
wherein when the first display panel is heated, the first display panel is warped towards the second display panel.

2. The image display apparatus according to claim 1, wherein when the second display panel is heated, the second display panel is warped away from the first display panel.

3. The image display apparatus according to claim 1 or 2, wherein
the first display panel includes a light transmissive sheet on a side opposite to a side facing the second display panel, the light transmissive sheet comprising a material having a smaller thermal expansion coefficient than a thermal expansion coefficient of the at least one first polarizing plate.

4. The image display apparatus according to claim 1 or 2, wherein
the first display panel includes a light transmissive sheet on a side facing the second display panel, the light transmissive sheet comprising a material having a greater thermal expansion coefficient than a thermal expansion coefficient of the at least one first polarizing plate.

5. The image display apparatus according to claim 1 or 2, wherein
the at least one first polarizing plate is a pair of first polarizing plates respectively arranged along both of the main surfaces of the first liquid crystal cell, and
in the first display panel, among the pair, a first polarizing plate on a side opposite to a side facing the second display panel is thinner than another first polarizing plate on the side facing the second display panel.

6. The image display apparatus according to claim 1 or 2, wherein
the at least one first polarizing plate is a pair of first polarizing plates respectively arranged along both of the main surfaces of the first liquid crystal cell, and
in the first display panel, among the pair, a first polarizing plate on a side opposite to a side facing the second display panel comprises a material having a smaller thermal expansion coefficient than a thermal expansion coefficient of a material comprised in another first polarizing plate on the side facing the second display panel.

7. The image display apparatus according to any one of claims 1 to 6, further comprising:
a backlight unit,
wherein the first display panel is located between the second display panel and the backlight unit.
